# EUROPEAN PATENT APPLICATION

(11) **EP 1 990 321 A1**
(43) Date of publication of application: **12.11.2008**
(21) Application number: 08008654.9
(22) Date of filing: 08.05.2008
(51) Int. Cl.: C03B 5/235, C03C 13/00

(54) **Submerged combustion for melting high-temperature glass**

(30) Priority: 11.05.2007 US 803088
(71) Applicant: Johns Manville, Denver CO 80202 (US)
(72) Inventor: Bauer, John , Frederick, Castle Rock, CO 80108 (US); Huber, Aaron, Morgan, Castle Rock, CO 80108 (US)
(74) Representative: Luderschmidt, Schüler & Partner

(57) **Abstract**

Molten glass is formed from high-temperature glass batch by feeding the glass batch to a melt chamber and heating the glass batch in the melt chamber using one or more submerged combustion burners to melt the glass batch and form molten glass. The molten glass can be removed from the melt chamber and fiberized.

## Description

### Field of Art

The present disclosure relates to a process for melting difficult compositions for manufacture of high-temperature glass.

### Background

Conventional methods for melting glass batch typically use burners fixed above a melt surface of molten glass. Heating is thereby primarily by radiation. Some energy is also necessarily transferred to air inside the furnace, which can be highly inefficient when trying to achieve the high temperatures required for melting high-temperature glass batch, which high temperatures are attributable to the refractory nature of the raw materials of the high-temperature glass batch. Conventional methods for producing high-temperature glass continuous fiber typically require melting in small volumes in furnaces lined with dense and expensive refractory materials or in platinum or platinum-lined vessels, which are also very expensive and have limited throughput capability. WO 98/18734 relates to an in-line process for producing high-temperature stable glass, which is economically unattractive in the long term, due to a required approximate 1.25 kilowatts of power to form one pound of glass, combined with production limited to tens of pounds per hour. What is needed is an easier and more economical method of melting high-temperature glasses.

### Submerged Combustion Burners

Submerged combustion is known. For example, U.S. Patent No. 6,460,376, the contents of which are hereby incorporated by reference in their entirety, relates to a process for melting and refining vitrifiable materials for the purpose of continuously feeding glass-forming plants with molten glass. U.S. Patent No. 6,857,999, the contents of which are hereby incorporated by reference in their entirety, relates to a process intended to treat waste, in particular industrial, farm-produce or biological waste, in order to destroy it or at the very least in order to render it inert and without danger to the environment. U.S. Patent No. 6,883,349, the contents of which are hereby incorporated by reference in their entirety, relates to a process for preparing certain materials that can be used for manufacturing glass.

The application of submerged combustion techniques to high temperature glass has heretofore been unknown. High temperature glasses with their particular oxide content and need for uniformity/homogeneity for subsequent glass fiberization provides a challenge for effective and energy efficient melting of the glass.

### Summary

Accordingly, provided is a method of forming molten glass from glass batch comprising feeding glass batch to a melt chamber and heating the glass batch in the melt chamber using one or more submerged combustion burners to melt the glass batch and form molten glass. The glass batch comprises high-temperature glass.

Also provided is a method of forming glass fibers comprising feeding glass batch to a melt chamber and heating the glass batch in the melt chamber using one or more submerged combustion burners to melt the glass batch and form molten glass. The molten glass is then removed from the melt chamber and the molten glass fiberized. The glass batch comprises high-temperature glass. The method provides a melted glass batch of high temperature glass uniform in its characteristics, appropriate for glass fiberization. The method has been found effective for melting the high temperature glass and for doing so in an energy efficient manner.

### Brief Description of the Drawing Figures

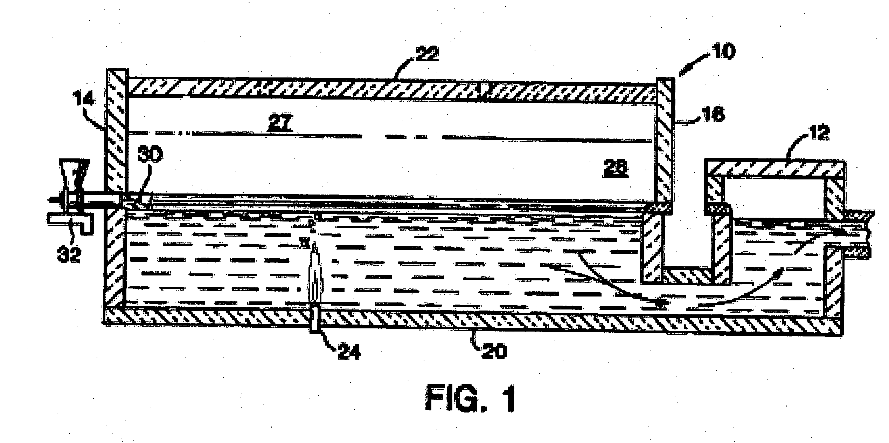

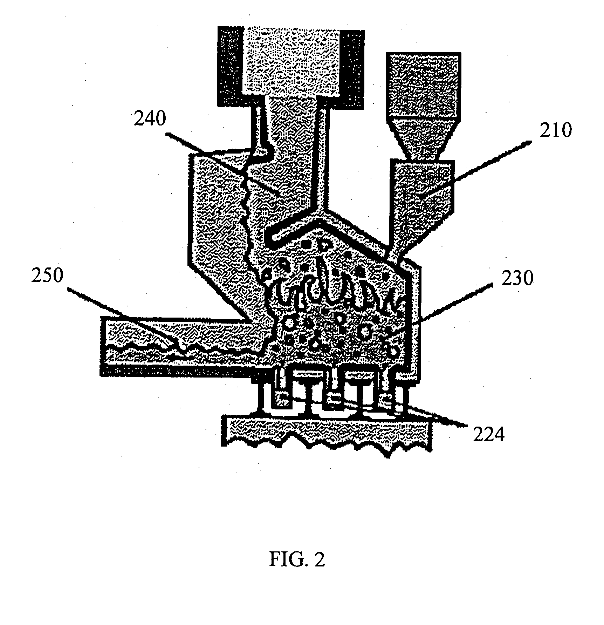

FIGs. 1 and 2 show basic schematic representations of an apparatus for forming molten glass from glass batch as provided herein.

### Detailed Description

The present invention employs submerged combustion in the melting of high temperature glass. Submerged combustion provides enhanced mixing, higher shear forces and more direct heat transfer from submerged combustion burners to high-temperature glass melt, as compared with conventional melting methods, resulting in faster and more complete melting of batch materials, while minimizing temperature gradients in the molten glass bath. The result is a more efficient process and a melted high temperature glass batch suitable for fiberization. In addition, a submerged combustion melter (SCM) typically has cooled walls, which create a frozen glass layer along the walls to minimize glass and refractory interactions and provide required operational life, which minimizes the use of precious metals and permits larger scale operations. As such, an SCM making high-temperature glass requires a surface area of less than 1.0 ft²/ton of melt produced/day, while conventional melt chambers typically operate in the range of 4 to 6 ft²/ton of melt produce/day. With regard to the melting of a high-temperature glass in an SCM, it has been surprisingly discovered that the small size and high throughput impacts overcome heat losses from the cooled walls to provide energy savings, and thus, an economical method of melting the high-temperature glass.

Accordingly, the present invention provides one with a method whereby a high-temperature glass suitable for fiberization or a glass requiring melting of high-temperature refractory components can be produced efficiently at high throughput using a minimum amount of energy.

More specifically, submerged combustion is used in a melting process to produce uniform and reasonably homogeneous molten glasses, which may be used for glass fiber formation. In particular, the process is applicable to the melting of high-temperature glass batch that is difficult to melt by conventional means due to the refractory nature of the raw materials and the very high temperatures required, and enables melting at rapid rates, sufficient to allow economical processes that produce large amounts of glass fiber to meet market demands. Submerged combustion for melting glass batch is applicable to the formation of both continuous and discontinuous glass fiber products.

As used herein, the phrase "submerged combustion burners" refers to burners configured so that the "flames" generated therefrom or the combustion gases resulting from the flames develop within the melt chamber where glass batch is melted, within the actual mass of the glass batch being melted (the "flames" generated are not strictly speaking the same "flames" as those produced by overhead burners, for greater simplicity). Generally, submerged combustion burners are placed so as to be flush with or project slightly from the sidewalls or bottom of the melt chamber.

Exemplary submerged combustion burners for use in the presently disclosed methods are described in U.S. Patent Application Publication No. 2005/0236747 A1, the contents of which are hereby incorporated by reference in their entirety. A mixture of fuel and oxidant, also referred to herein as a fuel-oxidant mixture, is ignited in the submerged combustion burner to initiate combustion and the combustion products so generated are introduced directly into a volume of glass batch being melted. Constant, reliable, and rapid ignition of the fuel-oxidant mixture is provided while a stable flame is maintained beneath the surface of the melt such that the mixture burns quickly and releases the heat of combustion directly into the melt. The submerged combustion burner supplies energy to the glass batch being melted in the form of thermal energy (heat release) and mechanical energy (injection of the fuel-oxidant mixture). Simultaneously therewith, a well-mixed, or homogeneous, melt is created from the action of the combustion products within the glass batch being melted. The well-mixed, or homogeneous, melt is achieved by injection of high-momentum jets of the combustion products into the melt, which improves the homogeneity of the melt and the quality of the final product. As used herein, "high-momentum," refers to momentum sufficient to overcome the liquid pressure, to create a desired mixing pattern in the melt, and to create forced upward travel of the flame and combustion products. Velocity of the combustion products is in the range of about 10 ft/sec to about 500 ft/sec.

The submerged combustion burner has a design that allows continuous and reliable firing directly into the volume of glass batch being melted and, subsequently, directly into the bath of molten glass. The submerged combustion burner is capable of firing gaseous and liquid fuels, alone or in combination, including, but not limited to, natural gas, liquefied, low-BTU gas, waste gas, hydrogen, hydrogen-enriched fuel gas, syngas, other combustible gases, and fuel oil of various compositions. The preferred fuels are gaseous fuels. Suitable oxidants can be selected from the group consisting of oxygen, oxygen-enriched air (up to 80% oxygen), air (which contains 21% oxygen), or any gas containing oxygen. The submerged combustion burner can be operated in both fuel-lean and fuel-rich modes, thereby providing either an oxidizing or reducing atmosphere. The submerged combustion burner can be operable with an equivalence ratio in the range of about 0.5 to 2.0. Submerged combustion burners that use air as an oxidant can achieve temperatures in excess of 1800°C, while submerged combustion burners that use oxygen as an oxidant can achieve much higher temperatures.

At least one of the fuel and oxidant can be preheated. At least a portion of the fuel can be injected preheated into the melt together with the feed glass batch through separate nozzles, which allows for the use of solid or highly viscous liquid fuels. Additional oxidant or fuel can be injected above the melt to complete the combustion process, provide additional heat, minimize particulate carryover, and decrease the amount of foaming on the melt surface.

Certain physical advantages are also realized from firing the submerged combustion burner directly up into the molten bath. These include 1) production of a very well mixed, homogeneous melt composition even when the material is amorphous (such as glass, waste, mineral wool, etc.), and 2) production of a melt with a certain amount of gaseous bubble inclusions. A well-mixed molten bath provides means to eliminate flaws from non-uniform compositions that are present when stirring is not complete. High levels of homogeneity are also advantageous when vitrifying materials in order to assure glassification of any volatile and labile components.

For some molten materials, the presence of bubbles is undesirable, and steps must be taken to remove the bubbles. Other materials, however, can either tolerate bubbles or benefit from their presence. For example, insulating materials including fiberglass and mineral wool routinely are manufactured with bubbles present, and so long as the bubble size and concentration are below accepted limits, bubbles have no impact on product quality or performance. Other materials such as reflective glass beads and vitrified wastes are also unaffected by the presence of bubbles. Abrasives produced by melting can also have bubbles, so long as the bubbles are small enough and in low enough concentration so as not to interfere with performance during abrasive "working".

Glass batch and/or cullet is charged to the melt chamber, in which oxidant (oxygen, oxygen-enriched air, or air)-fuel submerged combustion burners are fired below the surface of the material to be melted. Submerged combustion burners can be located on either the bottom or sidewalls of the melt chamber, which can have a variety of different shapes. The process produces very high heat transfer rates. At the same time, high shear from the passage of combustion gases through the melt leads to a high mass transfer rate and a well-mixed or homogeneous molten product.

Heat can be applied at a plurality of locations within the melt by employing a plurality of submerged combustion burners. To facilitate control of the plurality of submerged combustion burners, the submerged combustion burners can be manifolded together, receiving fuel and oxidant from individual fuel and oxidant inlets, to a manifold at which the fuel and oxidant streams flowing through a manifold fuel supply line and a manifold oxidant supply line are set, measured and controlled. Each submerged combustion burner can then receive a percentage of the provided fuel and oxidant, which can be further controlled by a submerged combustion burner fuel control valve and a submerged combustion burner oxidant control valve, which are in fluid communication with each submerged combustion burner. Such manifolding of the submerged combustion burners provides a significant reduction in equipment costs and simplification in the fuel and oxidant supply system compared to conventional systems in which fuel and oxidant supply to each submerged combustion burner is individually controlled.

### High-Temperature Glass

As used herein, "high-temperature glass" refers to a glass composition that is able to perform or remain stable (*i.e.,* not melt or crystallize) at continuous or transient service temperatures well above those of conventional glasses (*i.e.,* well above ambient or environmental temperatures). Exemplary glass compositions that can be melted using submerged combustion, though not suitable for fiber formation, are disclosed in U.S. Patent Nos. 6,753,279 and 7,087,541, the contents of which are hereby incorporated by reference in their entireties. High-temperature glass often contains high concentrations of SiO₂ and/or Al₂O₃, which make the composition (and its batch) very difficult to melt by conventional means. Temperatures in excess of 1650°C can be required.

Exemplary fiberizable glass compositions that can be melted using submerged combustion include those of E, R, S, and S2 glass fibers. Other glass compositions suitable for fiberization can contain significant amounts of ZrO₂, TiO₂, MgO, CaO, or iron oxides, which provide certain desirable properties to the fiber, for example, high tensile strength or tensile modulus ("stiffness"). While not high temperature properties in themselves, the formation of fibers requires melting of refractory oxide components at temperatures in excess of 1500°C and often in excess of 1600°C to form the initial glass melt. Melting of oxide components is often not easily accomplished by conventional means.

Table 1 provides chemical compositions of high-temperature glasses, in approximate weight %, that can be melted by submerged combustion. The high-temperature glasses of Table 1 are suitable for fiber production. Exemplary glasses include (borosilicate) E-glass, R-glass, S-glass, fire-resistant glass (e.g., high iron (Fe) fire-resistant glass and high alumina (Al₂O₃) fire-resistant glass), chemically resistant glass, and alkali resistant glass.

**Table 1**

| | E-glass | R-Glass | S-Glass | Fire-Resistant Glass | | Chemically Resistant Glass | Alkali Resistant Glass |
|---|---|---|---|---|---|---|---|
| SiO₂ | 52-56 | 55-57 | 65-67 | 38-45 | 55-62 | 55-63 | 60-70 |
| Al₂O₃ | 12-16 | 24-26 | 22-23 | 11-26 | 1-5 | 11-18 | 0-5 |
| Fe₂O₃ | 0.05-1.0 | 0.05-1.0 | 0.05-1.0 | 0.05-10 | 7-15 | 0.05-1.0 | 0-0.5 |
| B₂O₃ | 3.5-10 | 0-1 | 0 | 0-5 | 0-3 | 0 | 0 |
| CaO | 16-25 | 10-12 | 0-1 | 14-26 | 12-26 | 9-25 | 0-0.1 |
| MgO | 0-5 | 5-7 | 10-11 | 0-10 | 3-7 | 0-10 | 0-0.1 |
| Na₂O | 0-2 | 0-2 | 0-0.1 | 0-5 | 0-5 | 0-2 | 11-20 |
| K₂O | 0-2 | 0-2 | 0-0.1 | 0-5 | 0-5 | 0-2 | 11-20 |
| TiO₂ | 0-1.5 | 0-1 | 0-0.1 | 0-3 | 0-3 | 1-5 | 0-0.1 |
| ZrO₂ | 0-0.1 | 0-0.1 | 0-0.1 | 0-2 | 0-0.1 | 1-4 | 10-18 |

### Final Products

Discontinuous glass fiber frequently finds application in buildings as thermal or acoustical insulation. Discontinuous glass fiber can also provide a highly-valued, additional function of fire protection. Glasses require significant concentrations of CaO, MgO, and/or iron oxides to achieve the high temperature properties suitable for fire resistance. Oxide components allow the glass fibers to crystallize to a ceramic material, which retards further flame penetration as opposed to softening and slumping, which occurs in lower temperature glasses. As noted above, oxide components are refractory and difficult to melt by conventional methods. Submerged combustion allows oxide components to be melted rapidly and economically to produce homogeneous glasses suitable for production of glass fiber, more specifically, fire resistant glass fiber insulation.

Further illustration is provided upon reference to the figures of the Drawings. Referring to FIG. 1, a glass melting furnace 10 typically includes an elongated channel having an upstream end wall 14 and a downstream end wall 16, side walls 18 a floor 20 and a roof 22 all made from appropriate refractory materials. The glass melting furnace 10 includes one or more submerged combustion burners 24. The submerged combustion burners 24 heat the glass batch to melt the glass batch and form molten glass, and gas bubbles released from the submerged combustion burners 24 increase the molten glass circulation.

The glass melting furnace 10 includes two successive zones, a melting zone 27 and an optional downstream fining zone 28. From the optional downstream fining zone 28 molten glass may be provided to an optional refiner 12. The melting zone 27 is considered the upstream zone of the glass melting furnace 10 wherein glass batch is charged into the furnace using a charging device 32 of a type well known in the art. The molten glass can subsequently be fed to one or more glass-forming machines such as containers, fiberizers, float baths and the like (not shown).

Referring to FIG. 2, glass batch is fed directly into a melt chamber via a feeder 210. The melt chamber is heated by submerged combustion burners 224, which are positioned in the bottom of the melt chamber. Energy from the submerged combustion burners 224 is transferred directly to the incoming batch and molten glass 230, which is more efficient than conventional gas firings, which heats through an air space from above or to electric melting. Gas released in the combustion process, which exits via a separation zone 240, also provides bubbles that stir and mix the molten glass (*i.e.,* increase turbulence in the molten glass), further decreasing the time required to process the batch to homogeneous molten glass, which, in turn, allows more throughput and hence, greater economies of scale. Molten glass is removed along a side port 250 and can be conveyed to separate facilities for further fining or for fiberization.

While various embodiments have been described, it is to be understood that variations and modifications can be resorted to as will be apparent to those skilled in the art. Such variations and modifications are to be considered within the purview and scope of the claims appended hereto.

## Claims

1. A method of forming molten glass from glass batch comprising:
feeding glass batch to a melt chamber; and
heating the glass batch in the melt chamber using one or more submerged combustion burners to melt the glass batch and form molten glass;
with the glass batch comprising high-temperature glass.

2. The method of claim 1, wherein the molten glass is homogeneous.

3. The method of claim 1, wherein gas released from the one or more submerged combustion burners provides turbulence to glass batch melting in the melt chamber and/or molten glass in the melt chamber.

4. The method of claim 3, wherein the gas exits the melt chamber via a separation zone.

5. The method of claim 1, further comprising removing molten glass from the melt chamber via a port.

6. The method of claim 1, wherein the one or more submerged combustion burners are located in a bottom of the melt chamber.

7. The method of claim 1, wherein the one or more submerged combustion burners combust:
a fuel selected from the group consisting of natural gas, liquefied low-BTU gas, waste gas, hydrogen, hydrogen-enriched fuel gas, syngas, combustible gas, fuel oil, solid fuel, highly viscous liquid fuel, and combinations thereof; and
an oxidant comprising oxygen.

8. The method of claim 1, wherein the one or more submerged combustion burners can achieve temperatures in excess of 1800°C.

9. The method of claim 1, wherein the glass batch has a melting temperature in excess of 1500°C, preferably in excess of 1600°C, most preferred in excess of 1650°C.

10. A method of forming glass fibers comprising:
- feeding glass batch to a melt chamber;
- heating the glass batch in the melt chamber using one or more submerged combustion burners to melt the glass batch and form molten glass;
- removing molten glass from the melt chamber; and
- fiberizing the molten glass;
wherein the glass batch comprises high-temperature glass.

11. The method of claim 1 or 10, wherein the glass batch comprises about 52-56 weight % SiO₂, about 12-16 weight % Al₂O₃, about 0.05-1.0 weight % Fe₂O₃, about 3.5-10 weight % B₂O₃, about 16-25 weight % CaO, up to about 5 weight % MgO, up to about 2 weight % Na₂O, up to about 2 weight % K₂O, up to about 1.5 weight % TiO₂, and up to about 0.1 weight % ZrO₂.

12. The method of claim 1 or 10, wherein the glass batch comprises about 55-57 weight % SiO₂, about 24-26 weight % Al₂O₃, about 0.05-1.0 weight % Fe₂O₃, up to about 1 weight % B₂O₃, about 10-12 weight % CaO, about 5-7 weight % MgO, up to about 2 weight % Na₂O, up to about 2 weight % K₂O, up to about 1 weight % TiO₂, and up to about 0.1 weight % ZrO₂.

13. The method of claim 1 or 10, wherein the glass batch comprises about 65-67 weight % SiO₂, about 22-23 weight % Al₂O₃, about 0.05-1.0 weight % Fe₂O₃, up to about 1 weight % CaO, about 10-11 weight % MgO, up to about 0.1 weight % Na₂O, up to about 0.1 weight % K₂O, up to about 0.1 weight % TiO₂, and up to about 0.1 weight % ZrO₂.

14. The method of claim 1 or 10, wherein the glass batch comprises about 55-62 weight % SiO₂, about 1-5 weight % Al₂O₃, about 7-15 weight % Fe₂O₃, up to about 3 weight % B₂O₃, about 12-26 weight % CaO, about 3-7 weight % MgO, up to about 5 weight % Na₂O, up to about 5 weight % K₂O, up to about 3 weight % TiO₂, and up to about 0.1 weight % ZrO₂.

15. The method of claim 1 or 10, wherein the glass batch comprises about 38-45 weight % SiO₂, about 11-26 weight % Al₂O₃, about 0.05-10 weight % Fe₂O₃, up to about 5 weight % B₂O₃, about 14-26 weight % CaO, up to about 10 weight % MgO, up to about 5 weight % Na₂O, up to about 5 weight % K₂O, up to about 3 weight % TiO₂, and up to about 2 weight % ZrO₂.

16. The method of claim 1 or 10, wherein the glass batch comprises about 55-63 weight % SiO₂, about 11-18 weight % Al₂O₃, about 0.05-1.0 weight % Fe₂O₃, about 9-25 weight % CaO, up to about 10 weight % MgO, up to about 2 weight % Na₂O, up to about 2 weight % K₂O, about 1-5 weight % TiO₂, and about 1-4 weight % ZrO₂.

17. The method of claim 1 or 10, wherein the glass batch comprises about 60-70 weight % SiO₂, up to about 5 weight % Al₂O₃, up to about 0.5 weight % Fe₂O₃, up to about 0.1 weight % CaO, up to about 0.1 weight % MgO, about 11-20 weight % Na₂O, about 11-20 weight % K₂O, up to about 0.1 weight % TiO₂, and about 10-18 weight % ZrO₂.
